# EUROPÄISCHE PATENTSCHRIFT

(11) **EP 0 675 931 B1**
(45) Veröffentlichungstag und Bekanntmachung des Hinweises auf die Patenterteilung: **07.05.1997**
(21) Anmeldenummer: 94902747.8
(22) Anmeldetag: 10.12.1993
(51) Int. Cl.: C09G 1/04

(54) **NEUTRALE SELBSTGLANZEMULSION ZUR PFLEGE VON FUSSBÖDEN (III)**
NEUTRAL AUTO-GLOSS EMULSION FOR THE MAINTENANCE OF FLOORS (III)
EMULSION NEUTRE AUTOBRILLANTE POUR L'ENTRETIEN DE SOLS (III)

(30) Priorität: 22.12.1992 DE 4243472
(43) Veröffentlichungstag der Anmeldung: 11.10.1995
(73) Patentinhaber: Henkel-Ecolab GmbH & Co. OHG, 40554 Düsseldorf (DE)
(72) Erfinder: SKODELL, Birgit, D-40889 Düsseldorf (DE); OSBERGHAUS, Rainer, D-40593 Düsseldorf (DE); ROGMANN, Karl-Heinz, D-40880 Ratingen (DE); FAUBEL, Heiko, D-42929 Wermelskirchen (DE); BOSSEK, Harald, D-40547 Düsseldorf (DE)
(74) Vertreter: Wilk, Hans-Christof, Dr.
(86) Internationale Anmeldenummer: EP9303487
(87) Internationale Veröffentlichungsnummer: WO9414909

(56) Entgegenhaltungen:
- EP-A- 0 041 834
- EP-A- 0 449 038
- US-A- 4 460 734

## Beschreibung

Die vorliegende Erfindung betrifft ein Mittel zur Pflege von Fußböden, das in Form einer Dispersion vorliegt und auf dem Fußboden selbstglänzend auftrocknet. Derartige Mittel werden auch als Selbstglanzemulsionen bezeichnet.

Neue, bisher unbehandelte Fußböden und solche, die einer Grundreinigung unterzogen worden sind, werden heute zum Schutz vor Anschmutzungen und Beschädigungen ganz überwiegend mit Hilfe von Selbstglanzemulsionen gepflegt. Diese Mittel, die Wachs und/oder filmbildende Polymere in wechselnder Zusammensetzung enthalten, bilden auf den Fußböden nach dem Abtrocknen geschlossene glänzende Filme aus, die schmutzabweisend wirken. Dabei können Filme, die einen hohen Wachsanteil aufweisen, leicht zusätzlich poliert werden und sind bei Bedarf auch leicht wieder von den Oberflächen zu entfernen, während Filme, die überwiegend oder vollständig aus filmbildenden Polymeren bestehen, besonders widerstandsfähig gegen mechanische Beanspruchung sind. Ein Problem, das bei allen Selbstglanzemulsionen bis heute nicht vollständig gelöst ist, liegt darin, daß die Emulsionen bzw. Dispersionen ganz gleichmäßig auf den Oberflächen eintrocknen müssen, wenn ein vollständig geschlossener Schutzfilm entstehen soll. Sehr häufig ist zu beobachten, daß der zunächst geschlossene Film der wäßrigen Dispersion beim Eintrocknen aufreißt und sich unter Umständen sogar zu einzelnen Tropfen zusammenzieht, so daß der entstehende Pflegefilm ein fleckiges Aussehen erhält. Besonders stark ist dieser Effekt bei den heute bevorzugten Dispersionen mit weitgehend neutralem pH-Wert. Hier eine Verbesserung zu schaffen, war eine der Aufgaben der vorliegenden Erfindung. Gleichzeitig sollte die Stabilität der Dispersionen, vor allem bei Lagerung in der Kälte, verbessert werden.

Gegenstand der Erfindung ist eine wäßrige Selbstglanzemulsion zur Pflege von Fußböden, die in unverdünntem Zustand einen pH-Wert zwischen 5 und 9 aufweist, und die ein natürliches oder synthetisches Wachs und einen Alkohol aus der Gruppe Benzylalkohol, 2-Phenylethanol, 2-Phenoxyethanol und deren Gemische enthält. Besonders bevorzugt sind Selbstglanzemulsionen, deren pH-Wert im unverdünnten Zustand zwischen 6 und 8 liegt.

Die neuen Selbstglanzemulsionen zeichnen sich durch hohe Lagerstabilität, insbesondere auch bei niedrigen Temperaturen, aus. Besonders bemerkenswert ist das außerordentlich gleichmäßige Antrockenverhalten, bei dem ein Aufreißen des Films praktisch nicht zu beobachten ist, so daß gleichmäßige, optisch einwandfreie Pflegefilme resultieren.

Als Wachse eignen sich für die erfindungsgemäßen Selbstglanzmittel sowohl natürliche Wachse als auch synthetische Wachse, die natürlichen Ursprungs aber auch vollsynthetisch hergestellt sein können. Beispiele sind Polyethylenwachse, oxidierte Polyethylenwachse, Montanesterwachse, Paraffinwachse, Candellilawachs und Carnaubawachs. Von diesen werden in den erfindungsgemäßen Mitteln Montanesterwachs, Paraffinwachs, Carnaubawachs und Polyethylenwachs bevorzugt. Besonders bevorzugt werden Wachsmischungen aus Montanesterwachs und Polyethylenwachs sowie aus Montanesterwachs und Carnaubawachs. Der Gehalt an Wachs beträgt in den erfindungsemäßen Mitteln 2 bis 50 Gew.-%, vorzugsweise 2 bis 15 Gew.-%.

Sofern nicht überwiegend selbstemulgierende Wachse verwendet werden, enthalten die erfindungsgemäßen Emulsionen übliche Wachsemulgatoren in Mengen zwischen 0,1 und 10 Gew.-%, vorzugsweise zwischen 0,5 und 3 Gew.-%. Beispiele derartiger Emulgatoren sind der mit 20 Mol Ethylenoxid (E0) ethoxylierte Oleylcetylalkohol und Sorbitmonooleat.

Bei dem zweiten kennzeichnenden Bestandteil der erfindungsgemäßen Selbstglanzemulsion handelt es sich um einen aromatischen Alkohol aus der Gruppe Benzylalkohol, 2-Phenylethanol und 2-Phenoxyethanol, wobei selbstverständlich auch Gemische dieser Alkohole verwendet werden können. Diese Alkohole scheinen im Zusammenwirken mit den Wachsen in der wäßrigen neutralen Emulsion für die oben geschilderten unerwarteten Eigenschaften der neuen Mittel verantwortlich zu sein. Im allgemeinen reichen geringe Mengen dieser Alkohole aus. Ihr Anteil an den erfindungsgemäßen Mitteln beträgt 0,05 bis 11 Gew.-%, vorzugsweise 1 bis 5Gew.-%.

Neben den obengenannten Wachsen, die den überwiegenden Teil der Feststoffe im erfindungsgemäßen Mittel ausmachen, können die Mittel filmbildende Polymere in dispergierter Form enthalten. Der Polymeranteil dient dazu, die Pflegefilme widerstandsfähiger gegen mechanische Beschädigung zu machen. Bei diesen Polymerverbindungen handelt es sich um solche, die in Wasser bei neutralem pH-Wert wenigstens teilweise unlöslich sind und die eine minimale Filmbildetemperatur im Bereich zwischen etwa 0 und etwa 70 C° aufweisen. Es handelt sich dabei vorzugsweise um Polymere, die aus ethylenisch ungesättigten Monomeren hergestellt werden. Beispiele derartiger Monomerer sind Styrol, Acrylsäureester oder Methacrylsäureester aliphatischer, 1 bis 8 C-Atome aufweisender Alkohole, Acrylnitril, Vinylacetat, Acrylsäure und Methacrylsäure. Besonders bevorzugt werden Poly(meth)-acrylate aus zwei oder mehr dieser Monomeren, die gegebenenfalls in untergeordneter Menge auch weitere Monomere enthalten können. Ganz besonders bevorzugte Polymere enthalten 1 bis 30 Gew.-Teile an carbonsäuregruppenhaltigen Monomeren, 30 bis 70 Gew.-Teile Monomere, die Homopolymere mit Glastemperaturen unter 20 °C bilden, vorzugsweise Ester der Acrylsäure mit C₁-C₈-Alkoholen und/oder der Methacrylsäure mit C₄-C₈-Alkoholen und 30 bis 70 Gew.-Teile Monomere, die Homopolymere mit Glastemperaturen über Raumtemperatur bilden, vorzugsweise Methacrylsäureester von C₁-C₃-Alkoholen oder Styrol. Werden mehrere unterschiedliche Polymerverbindungen der vorstehend genannten Art im Gemisch eingesetzt, soll die Filmbildetemperatur, die für das Gemisch ermittelt wird, im Bereich zwischen 0 und 70 °C liegen. Die genannten Filmbildungstemperaturen beziehen sich auf das weichmacherfreie System, d. h. auf die Polymeren ohne weitere Zusätze.

Die Polymeren können in den erfindungsgemäßen Mitteln in Mengen bis zu 30 Gew.-% , insbesondere zwischen ... und ... Gew.-% enthalten sein. Diese Zahlenangaben beziehen sich auf die reinen Polymeren. Wird bei der Herstellung der erfindungsgemäßen Suspensionen von dispergierten Polymeren ausgegangen, so wie sie vielfach im Handel angeboten werden, sind von diesen Dispersionen entsprechend höhere Mengen bei der Herstellung der erfindungsgemäßen Mittel zu verwenden.

Neben den vorstehend genannten Inhaltsstoffen können die erfindungsgemäßen Selbstglanzemulsionen weitere Wirk- und Hilfsstoffe in geringeren Mengen enthalten. Als Beispiele seien Weichmacher, Netz- und Verlaufshilfsmittel, Netzharze, Konservierungsmittel und Parfümöle genannt.

Weichmacher dienen zur Modifizierung der Filmkonsistenz, wobei man zwischen temporären Weichmachern und permanenten Weichmachern unterscheidet. Bei den temporären Weichmachern handelt es sich um flüchtige hydrophile Lösungsmittel, die das Zusammenlaufen der Polymerteilchen bei der Filmbildung begünstigen. Beispiele sind Ethylenglykol, Diethylenglykol sowie Glykol- und Polyglykolether. Ihr Anteil an den erfindungsgemäßen Mitteln liegt im allgemeinen nicht über 15 Gew.-%, vorzugsweise zwischen 0,5 und 10 Gew.-%. Permanente Weichmacher sind Flüssigkeiten, die unter Normalbedingungen nicht flüchtig sind, so daß mit deren Hilfe die Beschaffenheit des Pflegefilms anhaltend beeinflußt werden kann. Beispiele derartiger Weichmacher sind Dibutylphthalat, Tributylphosphat, Tributoxyethylphosphat und N-Methylcaprolactam. Auch dieser Weichmachertyp ist in den erfindungsgemäßen Suspensionen im allgemeinen zu nicht mehr als 15 Gew.-% enthalten. Bevorzugt wird ein Gehalt an 0,5 bis 10 Gew.-%.

Netz- und Verlaufshilfsmittel dienen dazu, die Benetzung der behandelten Oberfläche beim Auftrag der Selbstglanzemulsion zu verbessern; außerdem wird dadurch die Verdünnung der Mittel mit Wasser, beispielsweise beim Auftragen auf feuchte Fußböden, erleichert. Verwendbar sind die üblichen Tenside, insbesondere nichtionische und anionische Tenside, beispielsweise Ethoxylate von langkettigen Alkoholen oder Alkylbenzolsulfonate und Fettalkoholsulfate. Sehr häufig werden hier auch Fluortenside verwendet, die eine besonders starke Erniedrigung der Grenzflächenspannung bewirken. Der Gehalt an Netz- und Verlaufshilfsmitteln liegt im allgemeinen nicht über 5 Gew.-%, bezogen auf das Gesamtgewicht der Selbstglanzemulsion. Vorzugsweise liegt der Gehalt zwischen 0,1 und 2 Gew.-%. Auch mit Hilfe von Netzharzen kann die Benetzung der Oberfläche beim Auftrag verbessert werden. Bei diesen Harzen handelt es sich beispielsweise um Styrol-Maleinatharze oder um klargestellte Polyacrylate. Ihr Gehalt in den Mitteln liegt im allgemeinen nicht über 5 Gew.-%, vorzugsweise werden zwischen 0,1 und 2 Gew.-% eingesetzt.

Die Herstellung der Mittel kann nach üblichen Suspendierverfahren erfolgen. So kann man beispielsweise nach der Wasser-in-Wachs-Methode oder nach der Wachs-in-Wasser-Methode arbeiten. Der pH-Wert wird gegebenenfalls mit Alkalien auf den gewünschten Wert im neutralen pH-Bereich (pH 5 bis pH 9) eingestellt.

Die Anwendung der erfindungsgemäßen Selbstglanzemulsionen erfolgt in der Regel unverdünnt: Die Emulsionen werden auf die Oberfläche aufgetragen und dort mit Hilfe eines weichen Gegenstandes, beispielsweise eines Schwamms oder eines Lappens, gleichmäßig in der gewünschten Menge verteilt. Nach dem Verdunsten des Wassers verbleibt bei diesem Pflegeverfahren ein außerordentlich gleichmäßiger glänzender Pflegefilm.

### Beispiele

Zunächst wurde aus den in der Tabelle angegebenen Wachs und Emulgatoren eine Wachs-in-Wasser-Dispersion hergestellt und diese dann mit den übrigen Komponenten zu den fertigen Mitteln aufgemischt. Die in der Tabelle angegebenen Zahlen sind, soweit nichts anderes angeführt ist, Gewichtsprozente, und beziehen sich auf die reinen Wirkstoffe. Die so hergestellten Selbstglanzemulsionen 1 bis 4 wurden dann auf ihre Beständigkeit bei Lagerung in der Kälte und auf ihre Verlaufseigenschaften hin geprüft.

Zur Beurteilung der Kältestabilität wurden die Proben bei 0 - 3 °C für 12 Wochen eingelagert. Während dieser Zeit wurden die Proben wöchentlich aus dem Gefrierschrank genommen und nach Erreichen der Raumtemperatur visuell beurteilt. Sichtbare Zeichen der Instabilität waren Ausflockungen, Bodensatz, Aufschwemmungen und Änderung der Viskosität. Die Bewertung wurde nach folgendem Maßstab vorgenommen:
0 einheitliche, homogene Probe
1 leichte Aufschwemmungen oder Bodensatz nach 12 Wochen
2 leichte Aufschwemmungen oder Bodensatz nach 3 Wochen
3 mittlere Aufschwemmung oder Bodensatz nach 3 Wochen
4 starke Aufschwemmungen oder Bodensatz nach 3 Wochen
5 sehr starke Aufschwemmungen oder Bodensatz nach 3 Wochen

Die Verlaufseigenschaften wurden durch praxisgerechte Anwendung auf schwarzen, unbehandelten PVC-Bahnen ermittelt. Dazu wurden je Prüfvorgang 10ml der zu prüfenden Suspension mit Hilfe eines Handauftraggerätes auf eine 30 x 60 cm große PVC-Platte gleichmäßig verteilt. Das Auftraggerät bestand aus einem, auf einen Rahmen gespannten Polstervelourstoff, dessen wirksame Fläche 20 x 5,5 cm betrug. Nach dem Abtrocknen wurde das Aussehen der Oberfläche visuell nach folgender Skala beurteilt:
0 streifenfrei
1 schwach sichtbare gleichförmige Streifen
2 deutlich sichtbare Streifen
3 deutliche ungleichförmige Streifen
4 starke unregelmäßige Rückstände

**Tabelle**

| Beispiele | 1 | 2 | 3 | 4 |
|---|---|---|---|---|
| Isothiazolin | 0,02 | - | - | - |
| Montanwachs, Tropfpunkt 82 °C | 3,5 | 3,5 | 3,5 | 3,5 |
| Esterwachs, Erstarrungspunkt 85 °C | 3.5 | 3,5 | 3,5 | 3,5 |
| Oleylcetylalkohol + 23 EO | 0,5 | 0,5 | 0,5 | 0,5 |
| Isotridecylalkohol + 8 EO | 1,0 | 1,0 | 1,0 | 1,0 |
| Styrolacrylat MFT 45 °C * | 4,5 | 4,5 | 4,5 | 4,5 |
| Zonyl FSJ (Fluortensid) | 0,02 | 0,02 | 0,02 | 0,02 |
| Diethylethanolamin | 0,3 | 0,3 | 0,3 | 0,3 |
| Parfüm | 0,2 | 0,2 | 0,2 | 0,2 |
| 2-Phenoxyethanol | - | 2,0 | - | - |
| 2-Phenylethanol | - | - | 1,0 | - |
| Benzylalkohol | - | - | - | 1,0 |
| Wasser | zu 100 | zu 100 | zu 100 | zu 100 |
| pH-Wert | 8,4 | 8,4 | 8,4 | 8,4 |
| Lagerstabilität bei Temp. < 0°C | 3 | 0 | 0 | 0 |
| Verlauf | 4 | 0 | 0 | 0 |

| | | | | |
|---|---|---|---|---|
| * MFT = minimale Filmbildetemperatur | | | | |

Aus den Prüfergebnissen werden die vorteilhaften Eigenschaften der erfindungsgemäßen Selbstglanzemulsionen 2 - 4 gegenüber dem Vergleichsbeispiel 1 deutlich.

## Patentansprüche

1. Wäßrige Selbstglanzemulsion zur Pflege von Fußböden, die im unverdünnten Zustand einen pH-Wert zwischen 5 und 9 aufweist, enthaltend ein natürliches oder synthetisches Wachs und einen Alkohol aus der Gruppe Benzylalkohol, 2-Phenylethanol, 2-Phenoxyethanol und deren Gemische.

2. Selbstglanzemulsion nach Anspruch 1, deren pH-Wert im unverdünnten Zustand zwischen 6 und 8 liegt.

3. Selbstglanzemulsion nach einem der Ansprüche 1 oder 2, bei der der Gehalt an Wachs zwischen 2 und 50 Gew.-%, vorzugsweise zwischen 2 und 15 Gew.-% liegt.

4. Selbstglanzemulsion nach einem der Ansprüche 1 bis 3, die weiterhin 1 bis 20 Gew.-% einer wenigstens teilweise wasserunlöslichen Polymerverbindung mit einer minimalen Filmbildetemperatur zwischen 0 und 70 °C oder ein Gemisch mehrerer Polymerverbindungen, das diese Eigenschaft aufweist, enthält.

5. Selbstglanzemulsion nach einem der Ansprüche 1 bis 4, enthaltend 0,05 bis 11 Gew.-%, vorzugsweise 1 bis 5 Gew.-% eines Alkohols aus der Gruppe Benzylalkohol, 2-Phenylethanol, 2-Phenoxyethanol und deren Gemische.

6. Selbstglanzemulsion nach einem der Ansprüche 1 bis 5, enthalten Wachs aus der Gruppe Montanesterwachs, Paraffinwachs, Carnaubawachs, Polyethylenwachs und deren Mischungen.

7. Selbstglanzemulsion nach Anspruch 6, enthaltend ein Gemisch aus Montanesterwachs mit Polyethylenwachs oder Carnaubawachs.

8. Verwendung einer Selbstglanzemulsion nach einem der Ansprüche 1 bis 7 in unverdünntem Zustand zur Pflege von Fußböden.

## Claims

1. An aqueous self-shine emulsion for the care of floors which has a pH value of 5 to 9 in indiluted form, containing a natural or synthetic wax and an alcohol from the group consisting of benzyl alcohol, 2-phenylethanol, 2-phenoxyethanol and mixtures thereof.

2. A self-shine emulsion as claimed in claim 1 which has a pH value in undiluted form of 6 to 8.

3. A self-shine emulsion as claimed in claim 1 or 2, in which the wax content is between 2 and 50% by weight and preferably between 2 and 15% by weight.

4. A self-shine emulsion as claimed in any of claims 1 to 3 additionally containing 1 to 20% by weight of an at least partly water-insoluble polymer compound with a minimum film forming temperature of 0 to 70°C or a mixture of several polymer compounds with this property.

5. A self-shine emulsion as claimed in any of claims 1 to 4 containing 0.05 to 11% by weight and preferably 1 to 5% by weight of an alcohol from the group consisting of benzyl alcohol, 2-phenylethanol, 2-phenoxyethanol and mixtures thereof.

6. A self-shine emulsion as claimed in any of claims 1 to 5 containing a wax from the group consisting of montan ester wax, paraffin wax, carnauba wax, polyethylene wax and mixtures thereof.

7. A self-shine emulsion as claimed in claim 6 containing a mixture of montan ester wax with polyethylene wax or carnauba wax.

8. The use of the self-shine emulsion claimed in any of claims 1 to 7 in undiluted form for the care of floors.

## Revendications

1. Emulsion autobrillante aqueuse pour l'entretien de sols, qui comporte à l'état non dilué un pH de 5 à 9, contenant une cire naturelle ou synthétique et un alcool du groupe alcool benzylique, 2-phenyléthanol, 2-phenoxyéthanol et de leurs mélanges.

2. Emulsion autobrillante selon la revendication 1, dont la valeur du pH à l'état non dilué se situe entre 6 et 8.

3. Emulsion autobrillante selon les revendications 1 ou 2, dans laquelle la teneur en cire se situe entre 2 et 50 % en poids, de préférence entre 2 et 15 % en poids.

4. Emulsion autobrillante selon une des revendications 1 à 3, qui contient en outre 1 à 20 % en poids d'un composé polymère au moins partiellement insoluble dans l'eau, avec une température minimale de formation de film comprise entre 0 et 70°C ou un mélange de plusieurs composés polymères, qui comporte cette propriété.

5. Emulsion autobrillante selon une des revendications 1 à 4, contenant 0,05 à 11 % en poids de préférence 1 à 5 % en poids d'un alcool du groupe alcool benzylique, 2-phenyléthanol, 2-phenoxyéthanol et de leurs mélanges.

6. Emulsion autobrillante selon une des revendications 1 à 5, contenant de la cire du groupe cire d'esters montaniques, cire de paraffine, cire de carnauba, cire de polyéthylène et de leurs mélanges.

7. Emulsion autobrillante selon la revendication 6, contenant un mélange de cire d'esters montaniques avec de la cire de polyéthylène ou de la cire de carnauba.

8. Utilisation d'une émulsion autobrillante selon une des revendications 1 à 7 à l'état non dilué pour l'entretien de sols.
